# EUROPEAN PATENT APPLICATION

(11) **EP 3 050 799 A1**
(43) Date of publication of application: **03.08.2016**
(21) Application number: 15152585.4
(22) Date of filing: 27.01.2015
(51) Int. Cl.: B64D 11/06

(54) **Fixing structure for fixing a seat of a vehicle**

(71) Applicant: Superalloy Industrial Co., Ltd., Douliou City Yunlin Hsien (TW)
(72) Inventor: Shih, Henry, Yunlin Hsien (TW); Tsai, Wen-Ping, Yunlin Hsien (TW); Liang, Chin-Chuan, Yunlin Hsien (TW)
(74) Representative: Lang, Christian

(57) **Abstract**

A fixing structure for fixing a seat of a vehicle includes a fixing member which includes a locking section, a buffering section and a restricting section. The locking and restricting sections are provided with a thread for meshing with the thread of the locking passage, and the buffering section has no thread. The fixing seat includes a locking passage and a restricting space connected to the locking passage. The locking member is inserted through the cover and screwed into the fixing seat. When vibrations occur, the locking member will be unscrewed from the locking passage. However, in order to prevent the locking member from fully disengaging from the fixing seat, the buffering section is retained in the restricting space to prevent the thread of the restricting section from meshing with the thread of the locking passage, which prevents disengagement of the locking member in a vibrating condition.

## Description

### BACKGROUND OF THE INVENTION

### Field of the Invention

The present invention relates to an aircraft seat, and more particular to a fixing structure for fixing a seat of a vehicle.

### Description of the Prior Art

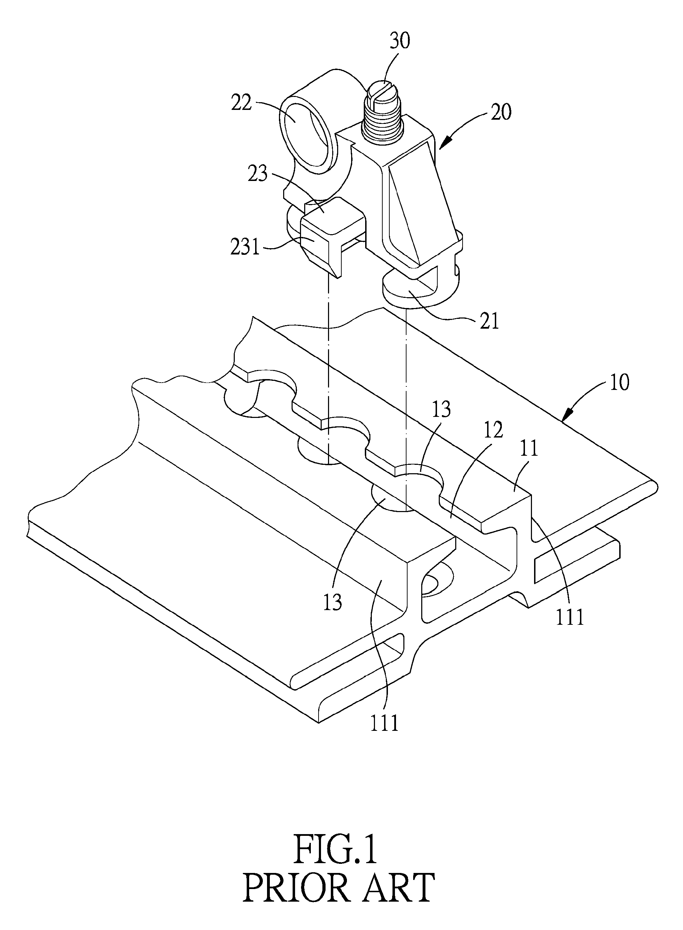

As shown in Fig. 1, a conventional fixing structure for an aircraft seat comprises: a slide rail 10, a fixing seat 20 and a fixing member 30. The slide rail 10 includes a top portion 11 and two lateral portions 111 which are perpendicularly connected to two sides of the top portion 11. At the top portion 11 is defined a slide slot 12 and plural spaced apart engaging apertures 13.

The fixing seat 20 includes a plurality of engaging portions 21 and a connecting portion 22. The engaging portions 21 are formed in the shape of the engaging apertures 13 and engaged into the slide rail 10 via the engaging apertures 13. The connecting portion 22 is fixed to a corresponding one of the legs of the aircraft seat, and includes a press member 23 with two paw portions 231. The press member 23 has a width corresponding to the width of the top portion 11 of the slide rail 10, and the two paw portions 231 are abutted against the two lateral portions 111.

The fixing member 30 is a screw inserted through the fixing seat 20 and has one end pressed against the press member 23.

The engaging portions 21 are formed in the shape of the engaging apertures 13 and engaged into the slide rail 10 via the engaging apertures 13, then moved to a position where the engaging portions 21 are misaligned with the engaging apertures 13, so that the fixing seat 20 is restricted in the slide rail 10 by the top portion 11.

The fixing member 30 is rotated to push the press member 23 against the top portion 11, so as to fix the fixing seat 20 to the slide rail 10.

However, the fixing member 30 is likely to loosen from the fixing seat 20 due to the vibration during bumpy flights.

The present invention has arisen to mitigate and/or obviate the afore-described disadvantages.

### SUMMARY OF THE INVENTION

The primary objective of the present invention is to provide a fixing structure for fixing a seat of a vehicle, wherein the locking member of the fixing structure can be prevented from getting loose during dumpy and vibrating flights.

To achieve the above objective, a fixing structure for fixing a seat of a vehicle in accordance with the present invention comprises:
a fixing seat includes a plurality of engaging portions formed at one end, a locking passage formed at another end thereof, and a fixing portion to be fixed to a leg of the seat. One end of the locking passage is connected to a restricting space, on an inner surface of the locking passage is formed a thread, the locking passage has an inner diameter and a length.

A cover is located above one side of the fixing seat and having a flat surface formed another side and a through hole formed in the flat surface, the elastic member is disposed between the fixing seat and the cover to keep the fixing seat and the cover from each other by a buffering space therebetween.

A locking member includes a locking section, a buffering section and a restricting section, and is inserted through the through hole and screwed into the fixing seat. The locking section and the restricting section each are formed with a thread, the locking section and the restricting section have a same outer diameter equal to the inner diameter of the locking passage, and the buffering section has an outer diameter smaller than the inner diameter and having a length larger than the length of the locking passage.

It is learned from the above description that the fixing structure for fixing a seat of a vehicle in accordance with the present invention is provided with a fixing member which includes a locking section, a buffering section and a restricting section. The locking and restricting sections are provided with a thread, and the buffering section has no thread. On the fixing seat are formed a locking passage and a restricting space connected to the locking passage. On the inner surface of the locking passage is formed a thread for meshing with the thread of the locking and restricting sections. The locking member is inserted through the cover and screwed into the fixing seat via the threads. When vibrations occur, the locking member will be unscrewed from the locking passage. However, in order to prevent the locking member from fully disengaging from the fixing seat, the buffering section is retained in the restricting space to prevent the thread of the restricting section from meshing with the thread of the locking passage, which consequently prevents disengagement of the locking member even in a vibrating condition.

### BRIEF DESCRIPTION OF THE DRAWINGS

Fig. 1 is a perspective view of a conventional fixing structure for fixing an aircraft seat;
Fig. 2 is an illustrative view showing that a fixing structure for fixing a seat of a vehicle in accordance with the present invention is fixed to the seat;
Fig. 3 is an illustrative view showing that the fixing structure for fixing a seat of a vehicle in accordance with the present invention is fixed to a slide rail;
Fig. 4 is an exploded view of the fixing structure for fixing a seat of a vehicle in accordance with the present invention;
Fig. 5 is a cross sectional view of the fixing structure for fixing a seat of a vehicle in accordance with the present invention;
Fig. 6 is a second cross sectional view of the fixing structure for fixing a seat of a vehicle in accordance with the present invention;
Fig. 7 is a third cross sectional view of the fixing structure for fixing a seat of a vehicle in accordance with the present invention; and
Fig. 8 is an enlarged view of a part of the fixing structure for fixing a seat of a vehicle in accordance with the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

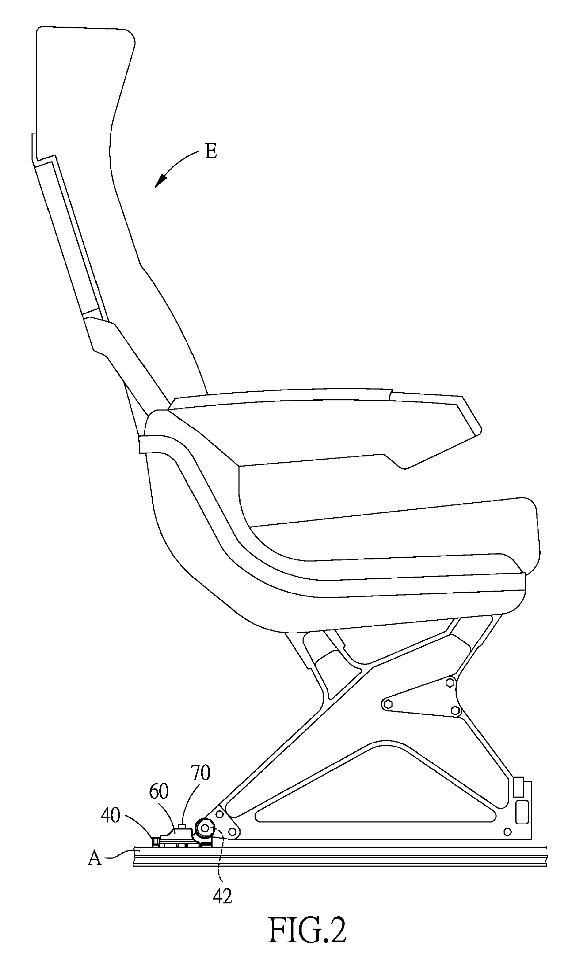

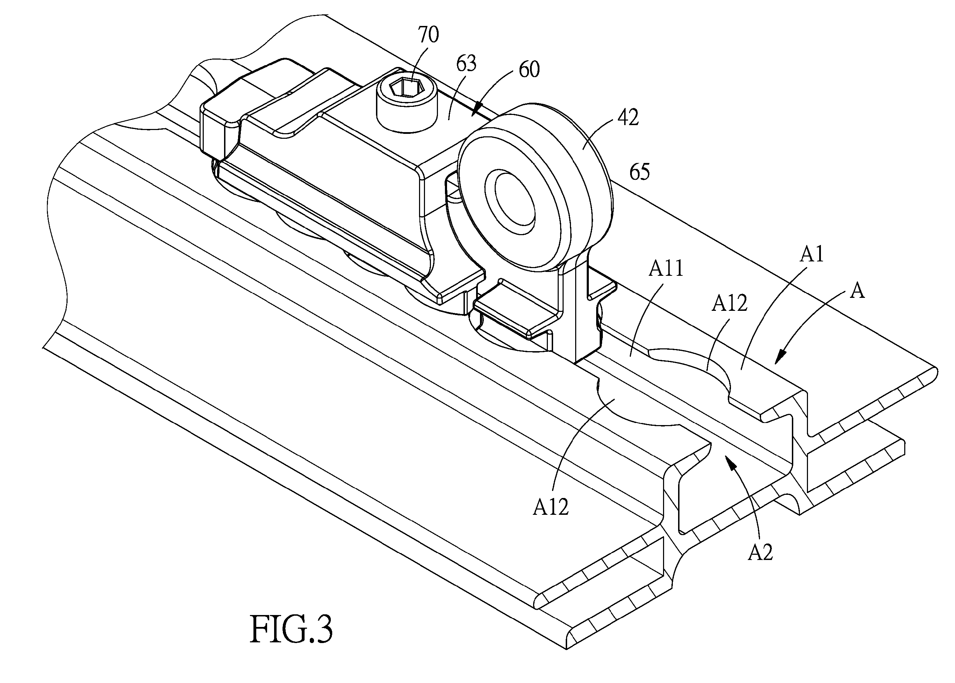

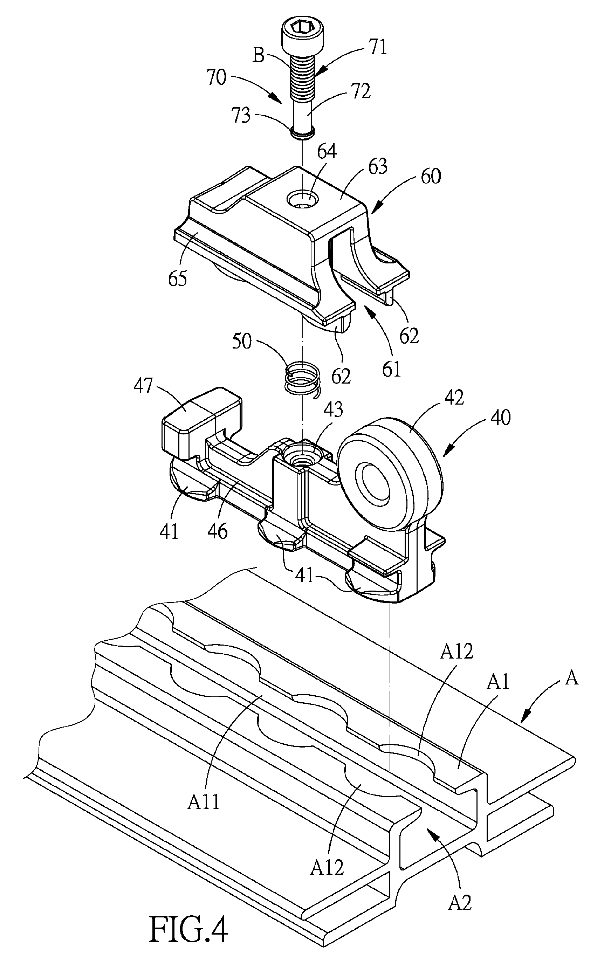

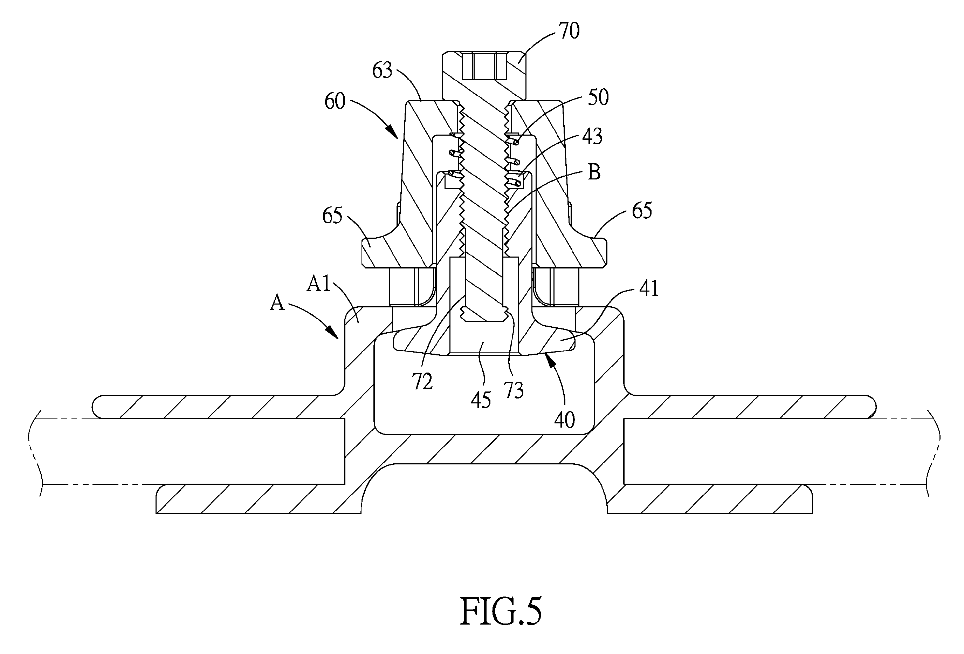

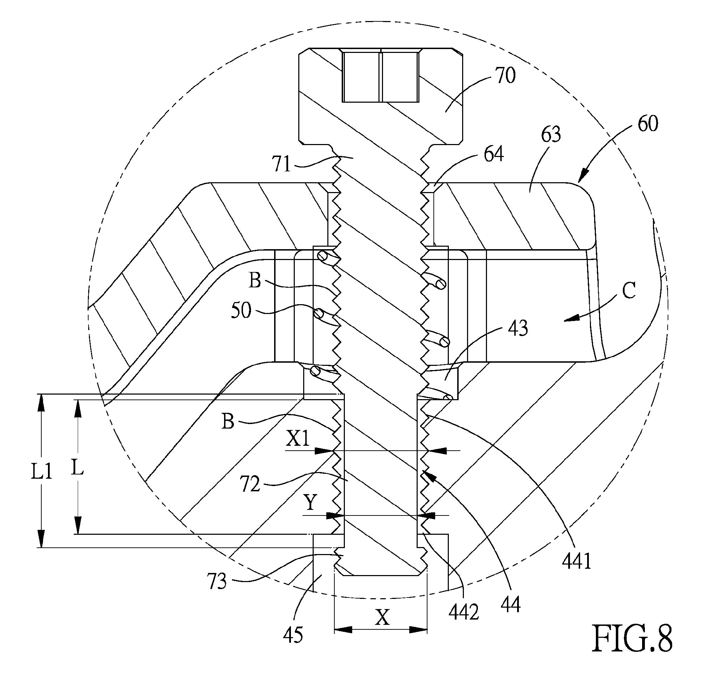

Referring to Figs. 2-8, a fixing structure for fixing a seat of a vehicle in accordance with the present invention comprises: a fixing seat 40, an elastic member 50, a cover 60, and a locking member 70.

The fixing seat 40 includes a plurality of engaging portions 41 formed at one end, an elastic-member hole 43 formed at another end thereof, and a fixing portion 42 to be fixed to a leg of a seat E. The elastic-member hole 43 is connected to one end of a locking passage 44, and another end of the locking passage 44 is connected to a restricting space 45. On the inner surface 441 of the locking passage 44 is formed a thread B which is an inner thread. At the position where the locking passage 44 and the restricting space 45 are connected is defined an entrance 442. The locking passage 44 has an inner diameter X1 and a length L. At two sides of the fixing seat 40 are formed plural restricting grooves 46 which are located adjacent to the one of the fixing seat 40 where the engaging portions 41 are located, and at the another end of the fixing seat 40 is formed a protruding stop portion 47.

The elastic member 50 is a spring with one end pressed against the elastic-member hole 43.

The cover 60 is located above the fixing seat 40 and restricted by the fixing portion 42 and the stop portion 47 of the fixing seat 40, and has an opening 61 formed on a side thereof facing the fixing seat 40. The opening 61 has a width corresponding to the width of the fixing seat 40. At two sides of the opening 61 is formed a plurality of restricting portions 62 located corresponding to the restricting grooves 46. The restricting portions 62 are inserted in the restricting grooves 46 and arc-shaped to correspond to the shaped of the restricting grooves 46. The cover 60 has a flat surface 63 formed another side opposite to the opening 61, and a through hole 64 formed in the flat surface 63. The elastic member 50 is disposed in the opening 61 and pressed between the fixing seat 40 and the cover 60 to keep the fixing seat 40 and the cover 60 from each other by a buffering space C therebetween. The cover 60 further has a horizontal-extending press portion 65 formed at two sides thereof and located beside the restricting portions 62 to form a clamp structure when used in combination with the fixing seat 40.

The locking member 70 includes a locking section 71, a buffering section 72 and a restricting section 73, and is inserted through the through hole 64, the opening 61 and the elastic member 50 and screwed into the fixing seat 40. The locking section 71 and the restricting section 73 each is formed with a thread B which is an outer thread for meshing with the thread B of the inner surface 441 of the locking passage 44. The locking section 71 and the restricting section 73 have a same outer diameter X equal to the inner diameter X1 of the locking passage 44, and the buffering section 72 has an outer diameter Y smaller than the inner diameter X1 and has a length L1 larger than the length L of the locking passage 44.

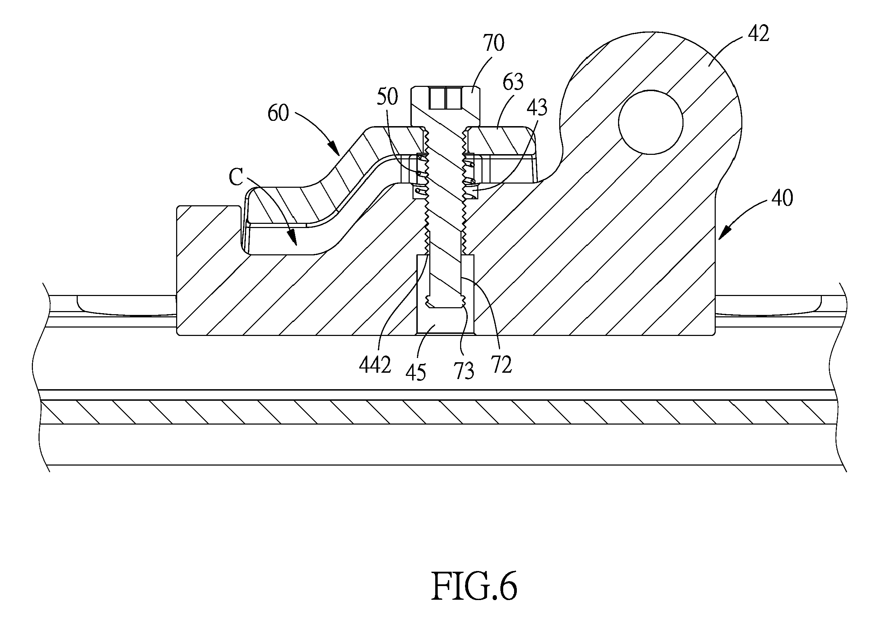

Referring to Fig. 6, which shows the locking status of the present invention, the fixing structure for fixing a seat of a vehicle in accordance with the present invention is locked to a hollow slide rail A which includes a top portion A1 and a hollow mounting portion A2. A slide groove A11 is defined on the top portion A1, along the slide groove A11 is arranged a plurality of engaging apertures A12 formed in the shapes of the engaging portions 41 and the restricting portions 62. The engaging portions 41 are inserted into the mounting portion A2 via the engaging apertures A12, then the fixing seat 40 is moved to a position where the engaging portions 41 are misaligned with the engaging apertures A12, so that the fixing seat 40 is restricted in the slide rail A by the top portion A1.

The locking member 70 is then rotated to press the cover 60 and the fixing seat 40 against the top portion A1 of the slide rail A, the cover 60 and the fixing seat 40 are pulled toward each other by the locking member 70, while the engaging portions 41 of the fixing seat 40 are stopped by the top portion A1. Hence, the engaging portions 41 will be pressed tightly against the top portion A1, and the press portion 65 of the cover 60 also presses against the top portion A1, so as to provide a clamping force toward the top portion A1, plus the engagement between the restricting portions 62 and the engaging apertures A12, which stops the fixing seat 40 from moving in the slide rail A, and consequently preventing the engaging portions 41 of the fixing seat 40 from disengaging from the engaging apertures A12 of the slide rail A.

When the locking member 70 is in the locked state, the restricting section 73 is inserted through the locking passage 44 and into the restricting space 45, the buffering section 72 is partially located in the locking passage 44 and partially or totally in the restricting space 45, and the locking section 71 is partially located in the locking passage 44 and has the thread B meshed with the thread B of the inner surface 441 of the locking passage 44.

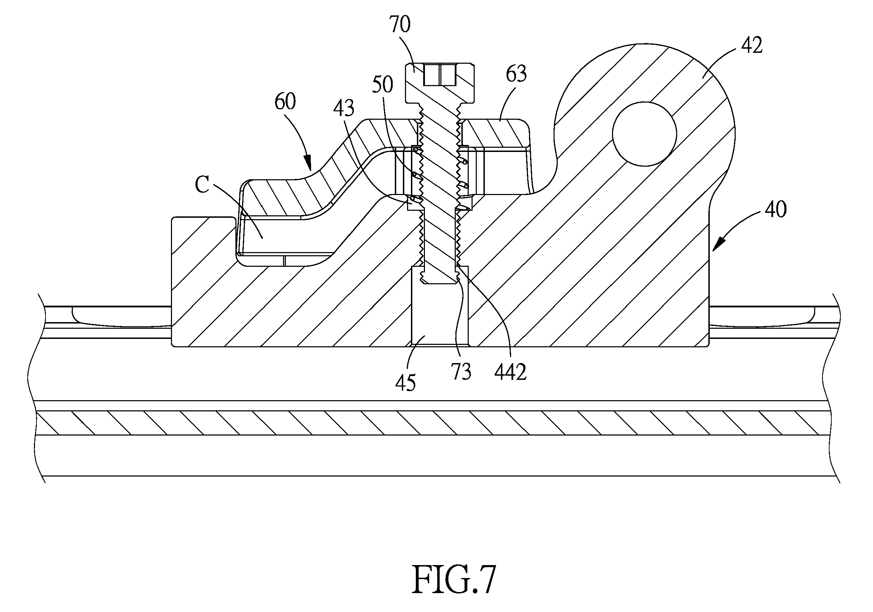

Referring then to Fig. 7, during a bumpy journey, if the thread B of the locking section 71 of is unscrewed from the thread B of the inner surface 441 of the locking passage due to the vibrations during the bumpy transport, causing disengagement of the locking member 70 from the locking passage 44, at this moment, the locking member 70 will move toward the cover 60 until the buffering section 72 moves into the locking passage 44. Since the buffering section 72 is provided with no thread B for meshing with the thread B of the locking passage 44, and has an outer diameter Y smaller than the inner diameter X1 of the locking passage 44, plus the gravity of the locking member 70, all these factors would stop the buffering section 72 from moving up and prevent the restricting section 73 from meshing with the thread B of the inner surface 441 of the locking passage 44.

Besides, the buffering section 72 has a length L1 larger than the length L of the locking passage 44, when in an unlocked state and under the effect of gravity, the buffering section 72 is partially inserted into the restricting space 45, and the restricting section 73 is located a distance away from the entrance 442, which prevents the thread B of the restricting section 73 from coming into contact and meshing with the thread B of the inner surface 441 of the locking passage 44. Namely, the locking member 70 won't be disengaged from the locking passage 44 because of vibrations even in a unlocked status.

It is learned from the above description that the fixing structure for fixing a seat of a vehicle in accordance with the present invention is provided with a fixing member which includes a locking section, a buffering section and a restricting section. The locking and restricting sections are provided with a thread, and the buffering section has no thread. On the fixing seat are formed a locking passage and a restricting space connected to the locking passage. On the inner surface of the locking passage is formed a thread for meshing with the thread of the locking and restricting sections. The locking member is inserted through the cover and screwed into the fixing seat via the threads. When vibrations occur, the locking member will be unscrewed from the locking passage. However, in order to prevent the locking member from fully disengaging from the fixing seat, the buffering section is retained in the restricting space to prevent the thread of the restricting section from meshing with the thread of the locking passage, which consequently prevents disengagement of the locking member even in a vibrating condition.

While we have shown and described various embodiments in accordance with the present invention, it is clear to those skilled in the art that further embodiments may be made without departing from the scope of the present invention.

## Claims

1. A fixing structure for fixing a seat of a vehicle **characterized by** comprising:
a fixing seat 40 including a plurality of engaging portions 41 formed at one end, a locking passage 44, and a fixing portion 42 to be fixed to a leg of the seat, one end of the locking passage 44 being connected to a restricting space 45, on an inner surface 441 of the locking passage 44 being formed a thread B, the locking passage 44 having an inner diameter X1 and a length L;
a cover 60 being located above one side of the fixing seat 40 and having a flat surface 63 formed another side and a through hole 63 formed in the flat surface 63; and
a locking member 70 including a locking section 71, a buffering section 72 and a restricting section 73, and being inserted through the through hole 63 and screwed into the fixing seat 40, the locking section 71 and the restricting section 73 each being formed with a thread B, the locking section 71 and the restricting section 73 having a same outer diameter X equal to the inner diameter X1 of the locking passage 44, and the buffering section 72 having an outer diameter Y smaller than the inner diameter X1 and having a length L1 larger than the length L of the locking passage 44.

2. The fixing structure for fixing the seat of the vehicle as claimed in claim 1, wherein an elastic member 50 is disposed between the fixing seat 40 and the cover 60, and an elastic-member hole 43 for holding the elastic member 50 is formed at another end of the fixing seat 40 and in communication with the locking passage 44, and the elastic member 50 is a spring.

3. The fixing structure for fixing the seat of the vehicle as claimed in claim 1, wherein the cover 60 has an opening 61 formed on a side thereof facing the fixing seat 40, the opening 61 has a width corresponding to the width of the fixing seat 40, the cover 60 is further provided with a press portion 65 to form a clamp structure when used in combination with the fixing seat 40.

4. The fixing structure for fixing the seat of the vehicle as claimed in claim 1, wherein a plurality of restricting grooves 46 is formed at two sides of the fixing seat 40 are formed plural restricting grooves 46, at two sides of the opening 61 is formed a plurality of restricting portions 62 located corresponding to the restricting grooves 46, and the restricting portions 62 are arc-shaped to correspond to the shape of the restricting grooves 46.

5. The fixing structure for fixing the seat of the vehicle as claimed in claim 1, wherein the threads B of the locking section 71 and the restricting section 73 are meshed with the thread B of the inner surface 441 of the locking passage 44.

6. A fixing structure for fixing a seat of a vehicle comprising:
a fixing seat 40 including a fixing portion 42 to be fixed to a leg of the seat, and a locking passage 44 formed, the locking passage 44 being provided with a thread B, and having an inner diameter X1 and a length L;
a cover 60 being located at one side of the fixing seat 40 ; and
a locking member 70 including a locking section 71, a buffering section 72 and a restricting section 73, and being inserted through the through hole 63 and screwed into the fixing seat 40, the locking section 71 and the restricting section 73 each being formed with a thread B, the locking section 71 and the restricting section 73 having a same outer diameter X equal to the inner diameter X1 of the locking passage 44, and the buffering section 72 having an outer diameter Y smaller than the inner diameter X1 and having a length L1 larger than the length L of the locking passage 44.

7. The fixing structure for fixing the seat of the vehicle as claimed in claim 6, wherein an elastic member 50 is disposed between the fixing seat 40 and the cover 60, the fixing seat 40 has a plurality of engaging portions 41 formed at one end thereof, the locking passage 44 is connected to a restricting space 45, an elastic-member hole 43 for holding the elastic member 50 is formed at another end of the fixing seat 40 and in communication with one end of the locking passage 44, the thread B of the fixing seat 40 is formed on an inner surface 441 of the locking passage 44, and the elastic member 50 is a spring.

8. The fixing structure for fixing the seat of the vehicle as claimed in claim 6, wherein the cover 60 has an opening 61 formed on a side thereof facing the fixing seat 40, the opening 61 has a width corresponding to the width of the fixing seat 40, the cover 60 is further provided with a press portion 65 to form a clamp structure when used in combination with the fixing seat 40.

9. The fixing structure for fixing the seat of the vehicle as claimed in claim 6, wherein a plurality of restricting grooves 46 is formed at two sides of the fixing seat 40 are formed plural restricting grooves 46, at two sides of the opening 61 is formed a plurality of restricting portions 62 located corresponding to the restricting grooves 46, and the restricting portions 62 are arc-shaped to correspond to the shape of the restricting grooves 46.

10. The fixing structure for fixing the seat of the vehicle as claimed in claim 6, wherein the threads B of the locking section 71 and the restricting section 73 are meshed with the thread B of the inner surface 441 of the locking passage 44.
